# EUROPÄISCHE PATENTSCHRIFT

(11) **EP 3 752 265 B1**
(45) Veröffentlichungstag und Bekanntmachung des Hinweises auf die Patenterteilung: **01.01.2025**
(21) Anmeldenummer: 19724430.4
(22) Anmeldetag: 13.05.2019
(51) Int. Cl.: B01D 17/00, B01D 35/30, B01D 36/00, B01D 29/15, B01D 29/23, B01D 29/54, B01D 29/56, B01D 29/58

(54) **PHASENTRENNVORRICHTUNG**
PHASE SEPARATING DEVICE
DISPOSITIF DE SÉPARATION DE PHASES

(30) Priorität: 19.05.2018 DE 102018004096
(43) Veröffentlichungstag der Anmeldung: 23.12.2020
(73) Patentinhaber: Hydac Process Technology GmbH, 66538 Neunkirchen (DE)
(72) Erfinder: OLSCHOK, Markus, 66540 Neunkirchen (DE); SCHINDLER, Christian, 66578 Schiffweiler (DE); HUBER, Manuel, 66292 Riegelsberg (DE)
(74) Vertreter: Bartels und Partner, Patentanwälte
(86) Internationale Anmeldenummer: PCT/EP2019/062190
(87) Internationale Veröffentlichungsnummer: WO 2019/224033

(56) Entgegenhaltungen:
- CA-A1- 2 576 634
- US-A- 3 016 984
- US-A- 3 085 690
- US-A- 4 058 463
- US-A1- 2018 056 212

## Beschreibung

Die Erfindung betrifft eine Phasentrennvorrichtung mit den Merkmalen im Oberbegriff von Anspruch 1.

Durch DE 10 2016 006 509 A1 ist eine Filtervorrichtung für Fluide bekannt, mit einem zumindest ein Filterelement aufnehmenden Gehäuse, das einen Einlass für die Zufuhr abzureinigenden Fluids zu einem Unfiltratraum des Gehäuses aufweist, der durch das Filtermedium des jeweiligen Filterelementes von einem Filtratraum des Gehäuses getrennt ist, der einen Filtratausgang aufweist. Dergestalt wird im Sinne einer Art Phasenauftrennung die partikuläre Verschmutzung aus dem Fluidstrom mittels des Filterelementes herausgefiltert. Ferner weist die bekannte Filtervorrichtung eine innerhalb des Unfiltratraums angeordnete magnetfelderzeugende Einrichtung auf, die eine Anhaftfläche für durch Magnetkraftwirkung daran angelagerte ferromagnetische Partikel aufweist, die dergestalt als eine weitere Phase im Rahmen der Phasentrennung aus dem Fluidstrom abgetrennt werden.

Ferner ist die Entmischung von mehrphasigen Fluiden, wie Dispersionen und Emulsionen, mittels Koaleszenz Stand der Technik. Eine verbreitete technische Anwendung besteht in der Abtrennung der wässrigen Phase als Beimengung in Ölen oder Kraftstoffen durch mittels Koaleszenzwirkung erzeugtes Zusammenwachsen kolloidaler Teilchen, wie die Bildung von Wassertropfen als die abzuführende wässrige Phase. Die bekannten, im Markt befindlichen Phasentrennvorrichtungen kommen hinsichtlich ihrer Effizienz besonders bei der Fremdölabscheidung bei fein dispergierter Ölphase an ihre Grenzen, beispielsweise bei der Abtrennung von Ölen, wie Bearbeitungsöle, Hydrauliköle, Schneidöle und dergleichen.

Die US 2018/0056212 A1 beschreibt eine Phasentrennvorrichtung mit den Merkmalen im Oberbegriff von Anspruch 1 mit einem zumindest ein Koaleszenzelement aufnehmenden ersten Vorrichtungsgehäuse, das einen Einlass für die Zufuhr einer Emulsion aufweist, die das jeweilige Koaleszenzelement zum Auftrennen in mindestens zwei seiner Bestandteile durchströmt; einen Auslass für einen abgetrennten Bestandteil; und einen weiteren Auslass für einen weiteren abgetrennten Bestandteil aufweist, der mit einer geringeren Dichte gegenüber dem einen Bestandteil auf diesem aufschwimmt, wobei sich in dem ersten Vorrichtungsgehäuse eine Kombination aus einem Koaleszenz- und einem Schwerkraftabscheider befindet und in einem zweiten Vorrichtungsgehäuse ein Partikelfilter angeordnet ist, der dem Koaleszenz- und Schwerkraftabscheider im ersten Vorrichtungsgehäuse als Vorfilter vorgeschaltet ist, und wobei für die Partikelfiltration mindestens ein Filterelement eingesetzt ist, das in dem zweiten Vorrichtungsgehäuse aufgenommen ist.

Weitere Phasentrennvorrichtungen gehen aus der US 4 058 463 A, der US 3 085 690 A und der CA 2 576 634 A1 hervor. Die US 3 016 984 A zeigt eine Gasfiltervorrichtung auf.

Der Erfindung liegt die Aufgabe zugrunde, eine Phasentrennvorrichtung mit zumindest einer Koaleszenzstufe zur Verfügung zu stellen, die sich durch eine besonders hohe Effizienz bei der Entmischung von Emulsionen, auch bei Emulsionen mit fein dispergierter Ölphase, auszeichnet.

Erfindungsgemäß ist diese Aufgabe durch eine Phasentrennvorrichtung gelöst, die die Merkmale des Patentanspruchs 1 in seiner Gesamtheit aufweist.

Gemäß dem Kennzeichen von Anspruch 1 ist vorgesehen, dass der Aufbau des zweiten Vorrichtungsgehäuses weitestgehend dem des ersten Vorrichtungsgehäuses entspricht und jeweils einen modularen Gehäuseaufbau in Form eines geschlossenen Druckbehälters aufweist. Die so teilweise durch Gleichteile gebildete Gesamtvorrichtung ist dadurch besonders rationell herstellbar.

Demgemäß sieht die Erfindung bei einer Vorrichtung der eingangs genannten Gattung neben dem Auslass für einen abgetrennten Bestandteil einen weiteren Auslass für einen weiteren abgetrennten Bestandteil vor, der mit einer geringeren Dichte gegenüber dem einen Bestandteil auf diesem aufschwimmt. Dadurch ist im gleichen ersten Vorrichtungsgehäuse eine Kombination aus Koaleszenz- und Schwerkraftabscheider ausgebildet. Neben hoher Effizienz der Abscheiderate stehen auch die abgetrennten Phasen in je einem eigens zugehörigen Auslass zur Verfügung, so dass die Bestandteile vollständig entmischt austragbar sind, beispielsweise in Form einer aufschwimmenden leichteren Ölphase an einem oberen Auslass und einer wässrigen Phase an einem darunterliegenden Auslass. Ferner ermöglicht die Kombination aus Koaleszenz- und Schwerkraftabscheider in einem Vorrichtungsgehäuse einen besonders kompakten Vorrichtungsaufbau mit im Vergleich zu reinen Schwerkraftabscheidern geringeren Badvolumina, was zu geringeren Tauschvolumina bei einem Badwechsel führt. Geringe Wärmeverluste durch eine vergleichsweise geringe Gehäuse-Oberfläche ermöglichen auch eine hohe Energieeffizienz.

Mit Vorteil ist die Anordnung so getroffen, dass der Einlass für die Emulsion in das Innere des jeweiligen Koaleszenzelements ausmündet, das von innen nach außen durchströmt ist.

Bei vorteilhaften Ausführungsbeispielen ist das erste Vorrichtungsgehäuse aus einem in vertikaler Aufstellrichtung gesehen langgestreckten, insbesondere mehrteiligen Gehäusemantel gebildet, das fußseitig, vorzugsweise im unteren Gehäusedrittel, den Einlass für die Emulsion und den einen Auslass für den einen abgetrennten Bestandteil aufweist und das kopfseitig, vorzugsweise im oberen Gehäusedrittel, besonders bevorzugt an zuoberst angeordneter Stelle des ersten Vorrichtungsgehäuses, den weiteren Auslass für den weiteren abgetrennten Bestandteil aufweist.

Mit Vorteil kann die Anordnung hierbei so getroffen sein, dass der Auslass für den einen abgetrennten Bestandteil unterhalb eines Eingangs in das diesem Einlass unmittelbar nachfolgende Koaleszenzelement in das erste Vorrichtungsgehäuse eingebracht ist.

Bei besonders vorteilhaften Ausführungsbeispielen steht, vom Aufnahmevolumen des ersten Vorrichtungsgehäuses her gesehen, mehr Volumen, vorzugsweise mehr als das 1,5-fache Volumen, für den weiteren als für den einen Bestandteil zur Verfügung. Dadurch ist für den Bestandteil geringer Dichte, wie Öl, eine verhältnismäßig große Totzone oberhalb des Koaleszenzelements gebildet, so dass die Schwerkraftabsetzung der leichteren Phase, wie Öl, besonders begünstigt ist.

Mit Vorteil kann der Auslass für den weiteren abgetrennten Bestandteil, wie Öl, mit einer Ventileinrichtung und/oder einer Entlüftungseinrichtung versehen sein. Die Entgasung durch die Entlüftungseinrichtung führt zur Beruhigung der leichteren Phase, wie der Ölphase, und das Vorhandensein der Ventileinrichtung ermöglicht einen automatischen Austrag der leichteren Phase, beispielsweise mittels Zeitsteuerung.

Mit Vorteil kann zumindest ein Teil der eingesetzten Koaleszenzelemente mit einer Filtrationsstufe als Bestandteil des Elements versehen sein. Zusätzlich zur Koaleszenzabscheidung kann dadurch im gleichen Element eine Pflegefiltration stattfinden.

Bei besonders vorteilhaften Ausführungsbeispielen ist zumindest ein Teil der eingesetzten Koaleszenzelemente in Abströmrichtung außenumfangsseitig mit mindestens einem zusätzlichen Stützmantel versehen, der vorzugsweise durch Adsorption das Tropfenwachstum des einen abgetrennten Bestandteils begünstigt. Der Stützmantel kann mit Vorteil aus Edelstahl gebildet und gegebenenfalls mehrlagig graduiert sein.

Diesbezüglich kann die Anordnung mit Vorteil so getroffen sein, dass die jeweilige Filtrationsstufe und/oder das jeweilige Koaleszenzelement in dem fluiddurchlässigen Stützmantel aufgenommen ist, der über zumindest zwei mittels eines zugehörigen Scharniers klappbare Mantelteile verfügt, die in einer aufgeklappten Stellung einen Tausch des jeweils verbrauchten Elements gegen ein Neuelement ermöglichen.

Bei zu entmischenden Fluiden, die mit Schmutzstoffen befrachtet sind, durchläuft die Emulsion vorzugsweise vor ihrer Phasenauftrennung eine Partikelfiltration.

Für die Partikelfiltration kann das jeweilige Filterelement von außen nach innen durchströmt sein, wobei der Filtratauslass des zweiten Vorrichtungsgehäuses über eine Verbindungsstelle an den Einlass des benachbart aufgestellten ersten Vorrichtungsgehäuses angeschlossen ist. Die Verbindungsstelle kann mittels Flanschrohren ausgebildet sein.

Mit besonderem Vorteil eignet sich die Erfindung zur Entmischung einer Emulsion in Form eines Wasser-Öl-Gemisches, wobei der eine aufzutrennende Bestandteil Wasser und der weitere abzutrennende Bestandteil ein Hydraulikmedium, wie Öl, ist.

Gemäß dem Patentanspruch 12 ist Gegenstand der Erfindung auch die Verwendung einer Phasentrennvorrichtung nach einem der Patentansprüche 1 bis 11 zur Entmischung mehrphasiger Medien.

Nachstehend ist die Erfindung anhand von in der Zeichnung dargestellten Ausführungsbeispielen im Einzelnen erläutert. Es zeigen:
- Fig. 1: einen schematisch vereinfachten Längsschnitt eines Ausführungsbeispiels der erfindungsgemäßen Phasentrennvorrichtung;
- Fig. 2: eine der Fig. 1 entsprechende Darstellung eines zweiten Ausführungsbeispiels, wobei die Elementmaterialien eines Koaleszenzelements und von Partikelfiltern weggelassen sind;
- Fig. 3: eine der Fig. 2 entsprechende Darstellung eines dritten Ausführungsbeispiels mit am Koaleszenzelement außenseitig befindlichem Stützmantel;
- Fig. 4: einen Längsschnitt eines gesondert dargestellten Koaleszenzelements; und
- Fig. 5: eine perspektivische Schrägansicht des gesondert dargestellten Stützmantels für das Koaleszenzelement.

Mit Bezug auf die beigefügten Zeichnungen ist die Erfindung an Ausführungsbeispielen beschrieben, bei denen sich in einem ersten Vorrichtungsgehäuse 2 eine Kombination aus einem Koaleszenz- und einem Schwerkraftabscheider befindet und in einem zweiten Vorrichtungsgehäuse 4 ein Partikelfilter angeordnet ist, der dem Koaleszenz- und Schwerkraftabscheider im ersten Vorrichtungsgehäuse 2 als Vorfilter vorgeschaltet ist. Während die Vorfiltration vor der Entmischung im ersten Vorrichtungsgehäuse 2 im Allgemeinen erforderlich ist, kann bei Medien, die frei von einer Befrachtung mit Schmutzstoffen sind, gegebenenfalls der Partikelfilter im zweiten Vorrichtungsgehäuse 4 weggelassen werden. Beide Vorrichtungsgehäuse 2 und 4 weisen einen im Wesentlichen baugleichen, modularen Gehäuseaufbau in Form eines geschlossenen Druckbehälters auf. Dieser weist bei beiden Gehäusen 2 und 4 jeweils ein Gehäuse-Oberteil 6, ein GehäuseMittelteil 8 und ein Gehäuse-Unterteil 10 auf, die kreiszylindrisch sind, den gleichen Durchmesser besitzen und über Flansche 12 miteinander verbunden sind. Die Gehäuse-Unterteile 10 weisen jeweils einen gewölbten Boden 14 auf, der bis auf eine Entleerungsschraube 16 geschlossen ist. Die Gehäuse-Oberteile 6, die, wie die Gehäuse-Unterteile 10, durch Tiefziehen im Napfzug hergestellt sind, weisen, in Entsprechung zum gewölbten Boden 14 der Unterteile 10, einen gewölbten oberen Abschluss 18 auf. Dieser ist beim zweiten Vorrichtungsgehäuse 4 durch eine zentral gelegene Entlüftungsschraube 20 geschlossen, während sich am Abschluss 18 des ersten Vorrichtungsgehäuses 2 ein zentral gelegener Auslass-Anschluss 22 befindet.

Für eine Vorfiltration sind im zweiten Vorrichtungsgehäuse 4 zwei Filterelemente 24 vorgesehen, die koaxial übereinander angeordnet und an jeweils einer ihrer Endkappen 26 so miteinander verbunden sind, dass ihre inneren Filterhohlräume absatzlos ineinander übergehen. Das obere Filterelement 24 ist an seiner oberen Endkappe 26 durch einen Verschlussdeckel 28 geschlossen, während sich an der unteren Endkappe 26 des unteren Filterelements 24 eine zentral gelegene Öffnung 30 befindet. Für die Vorfiltration strömt die Emulsion über einen Einlass 32 in das zweite Vorrichtungsgehäuse 4 ein, der sich unterhalb der unteren Endkappe 26 des unteren Filterelements 24 an der Seitenwand des Gehäuse-Unterteils 10 des zweiten Vorrichtungsgehäuses 4 befindet. Vom Innenraum des Gehäuse-Unterteils 10 gelangt die Emulsion zu dem die Außenseite der Filterelemente 24 umgebenden Zwischenraum im zweiten Vorrichtungsgehäuse 4 und durchströmt das Filtermedium der Filterelemente 24 von außen nach innen zum reinseitigen Innenraum der Filterelemente 24 hin. An der zentralen Öffnung 30 der unteren Endkappe 26 des unteren Filterelements 24 ist ein Rohrkrümmer 34 angeschlossen, über den das vorgefilterte Filtrat das Gehäuse-Unterteil 10 verlässt. Der Rohrkrümmer 34 ist über einen Verbindungsflansch 36 mit einem Rohrkrümmer 38 in Verbindung, der in den Innenraum des Gehäuse-Unterteils 10 des ersten Vorrichtungsgehäuses 2 hineingeführt ist. Mit seinem Ende bildet der Rohrkrümmer 38 den Eingang 40 für die Zufuhr der Emulsion ins Innere eines im ersten Vorrichtungsgehäuse 2 angeordneten Koaleszenzelements 42. Wie gezeigt, befindet sich dieser Eingang 40 an einer zentralen Öffnung der unteren Endkappe 44 des Koaleszenzelements 42. Wie der Zeichnung ebenfalls entnehmbar ist, befindet sich die untere Endkappe 44 mit dem Eingang 40 in einem axialen Abstand oberhalb des Bodens 14 des Gehäuse-Unterteils 10 sowie in einem axialen Abstand oberhalb eines seitlichen Auslasses 46 des Gehäuse-Unterteils 10 des ersten Vorrichtungsgehäuses 2. Die obere Endkappe 48 des Koaleszenzelements 42 ist, wie dies bei dem oberen Filterelement 24 im zweiten Vorrichtungsgehäuse 4 der Fall ist, mittels eines Verschlussdeckels 50 geschlossen.

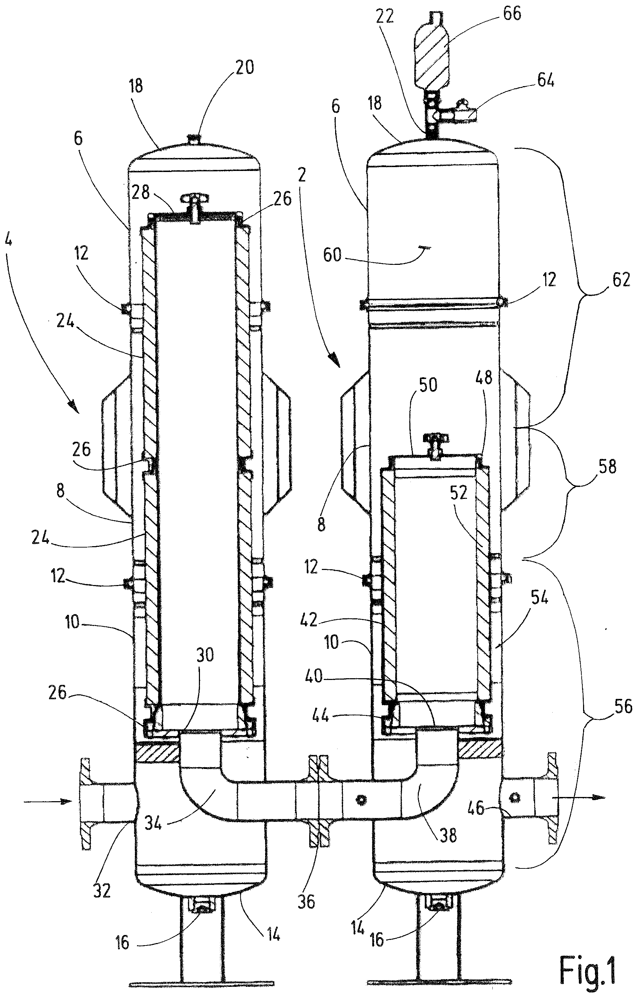

Im Betrieb gelangt die zu entmischende Emulsion über den Eingang 40 der unteren Endkappe 44 in den Innenraum des Koaleszenzelements 42 und durchströmt dessen Elementmaterial 52 von innen nach außen zu dem die Außenseite des Koaleszenzelements 42 umgebenden Raum 54 im ersten Vorrichtungsgehäuse 2 hin. Durch die Koaleszenzstufe im Elementmaterial 52 kommt es zur Phasentrennung durch Abscheiden einer wässrigen Phase durch das Wachstum von Tropfen wässriger Kolloide, die sich als wässrige Phase 56 im unteren Bereich des ersten Vorrichtungsgehäuses 2 ansammeln, sowie zu einer darüberliegenden Ölphase 58. Wie den Fig. 1 bis 3 entnehmbar ist, befindet sich im ersten Vorrichtungsgehäuse 2 oberhalb des Koaleszenzelements 42 ein Totraum 60, der sich als Öl-Absetzzone 62 nach oben an die Ölphase 58 anschließt und bis zum Auslass-Anschluss 22 am oberen Gehäuseabschluss 8 reicht. Dieser axial ausgedehnte Totraum 60, der für die leichtere, auf der wässrigen Phase aufschwimmende Ölphase ein Volumen zur Verfügung stellt, das bis zu 1,5-mal größer ist als das Volumen der wässrigen Phase, begünstigt eine hoch effiziente Schwerkraftabscheidung der leichteren Phase, wie Öl. Der am oberen Ende des Gehäuse-Oberteils 6 vorgesehene Anschluss 22 bildet den Auslass für die abgetrennte leichtere Phase, gesteuert durch ein Auslassventil 64. Ein am Anschluss 22 außerdem angeschlossener automatischer Entlüfter 66, der die Entgasung der Absetzzone 62 gewährleistet, begünstigt durch Beruhigung der Ölphase zusätzlich die Effizienz der Schwerkraftabscheidung. Das Koaleszenzelement 42 kann zusätzlich zur Koaleszenzstufe in seinem Elementmaterial 52 mit einer Filtrationsstufe versehen sein, die für eine Pflege-Filtration ausgelegt sein kann.

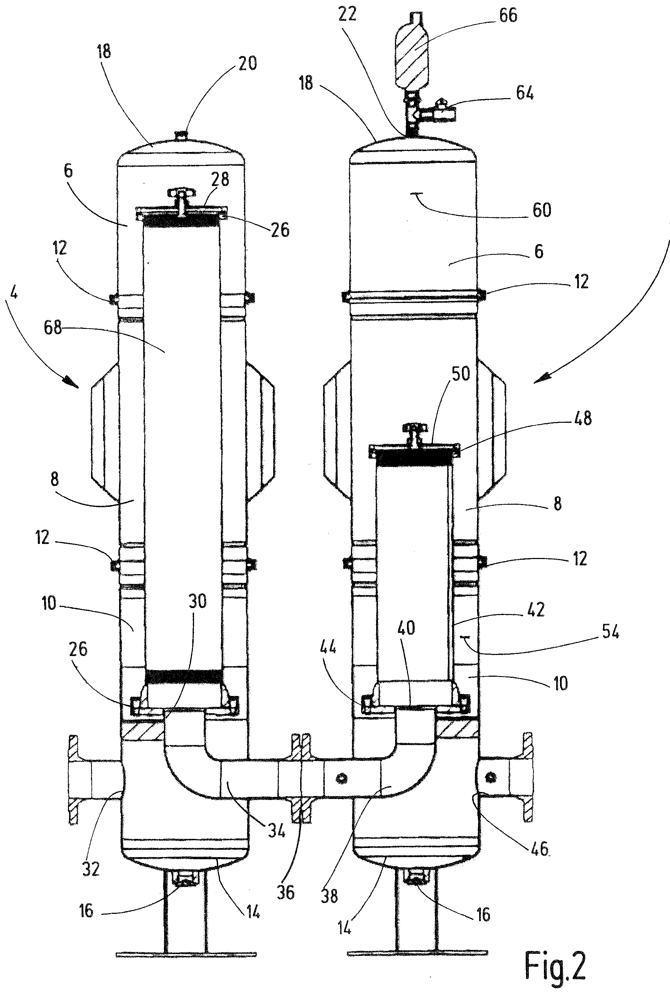

Die Fig. 2 zeigt ein abgewandeltes Ausführungsbeispiel, das sich vom Beispiel von Fig. 1 lediglich insofern unterscheidet, als im zweiten Vorrichtungsgehäuse 4 anstelle der aus zwei Filterelementen 24 gebildeten Filterkerze zur Partikelfiltration lediglich ein einteiliges Filterelement 68 eingesetzt ist.

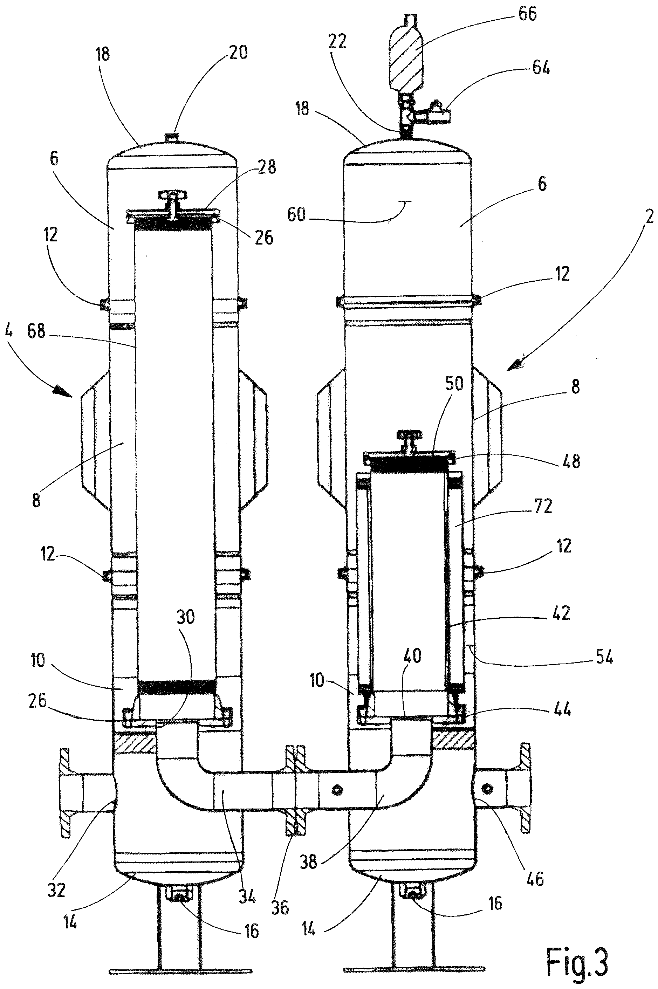

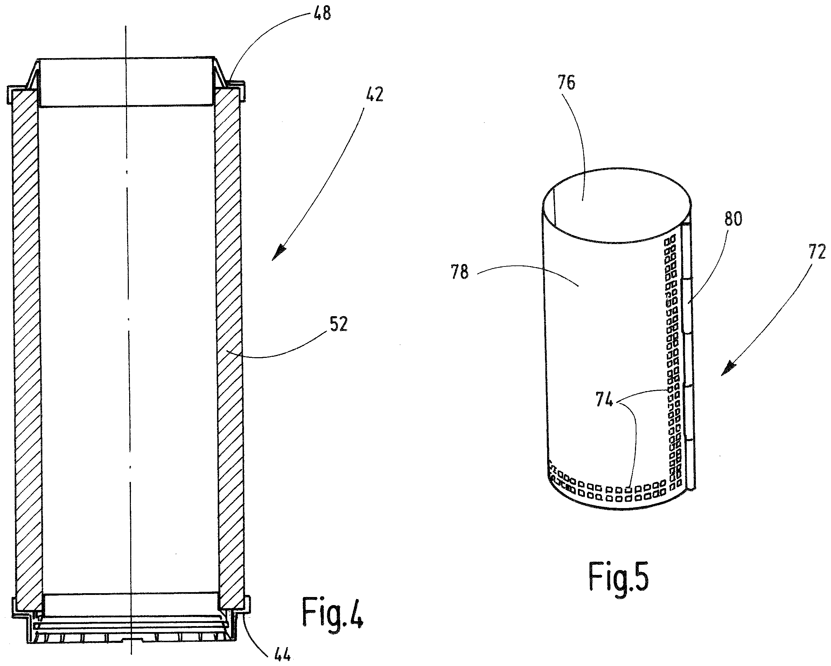

Das Ausführungsbeispiel von Fig. 3 entspricht dem Beispiel von Fig. 2, abgesehen davon, dass das Koaleszenzelement 42 an der Außenseite seines Elementmaterials 52 von einem Stützmantel 72 umgeben ist, der in Fig. 5 gesondert dargestellt ist und als wiederverwendbares Bauteil um das Koaleszenzelement 42, das in Fig. 4 ebenfalls gesondert dargestellt ist, herumlegbar ist. Der Stützmantel 72 ist aus Edelstahl gefertigt und weist ein Muster aus Perforationen 74 (in Fig. 5 nur teilweise dargestellt) auf. Aufgrund der hohen Grenzflächenenergie von Edelstahl begünstigt der Mantel 72 zusätzlich das Tropfenwachstum im Öl durch Adsorption an der Metalloberfläche. Insbesondere bei einem mehrlagigen, graduierten Aufbau der Koaleszenzstufe mit zunehmender Porosität in Strömungsrichtung ist eine hohe Effizienz der Abscheidung erreichbar. Wie Fig. 5 zeigt, ist der Mantel 72 aus klappbaren Mantelteile 76, 78 gebildet, die mittels einer Art Scharnier 80 miteinander verbindbar sind, so dass der Mantel 72 mehrmals verwendbar ist.

## Patentansprüche

1. Phasentrennvorrichtung mit einem zumindest ein Koaleszenzelement (42) aufnehmenden ersten Vorrichtungsgehäuse (2), das
- einen Einlass (38) für die Zufuhr einer Emulsion aufweist, die das jeweilige Koaleszenzelement (42) zum Auftrennen in mindestens zwei seiner Bestandteile durchströmt;
- einen Auslass (46) für einen abgetrennten Bestandteil; und
- einen weiteren Auslass (22, 64) für einen weiteren abgetrennten Bestandteil aufweist, der mit einer geringeren Dichte gegenüber dem einen Bestandteil auf diesem aufschwimmt,
wobei sich in dem ersten Vorrichtungsgehäuse (2) eine Kombination aus einem Koaleszenz- und einem Schwerkraftabscheider befindet und in einem zweiten Vorrichtungsgehäuse (4) ein Partikelfilter angeordnet ist, der dem Koaleszenz- und Schwerkraftabscheider im ersten Vorrichtungsgehäuse (2) als Vorfilter vorgeschaltet ist, und wobei für die Partikelfiltration mindestens ein Filterelement (24, 68) eingesetzt ist, das in dem zweiten Vorrichtungsgehäuse (4) aufgenommen ist,
**dadurch gekennzeichnet,**
**dass** der Aufbau des zweiten Vorrichtungsgehäuses (4) weitestgehend dem des ersten Vorrichtungsgehäuses (2) entspricht und jeweils einen modularen Gehäuseaufbau in Form eines geschlossenen Druckbehälters aufweist.

2. Phasentrennvorrichtung nach Anspruch 1, **dadurch gekennzeichnet, dass** der Einlass (38) für die Emulsion in das Innere des jeweiligen Koaleszenzelements (42) ausmündet, das von innen nach außen durchströmt ist.

3. Phasentrennvorrichtung nach Anspruch 1 oder 2, **dadurch gekennzeichnet, dass** das erste Vorrichtungsgehäuse (2) aus einem in vertikaler Aufstellrichtung gesehen langgestreckten, insbesondere mehrteiligen Gehäusemantel gebildet ist, das fußseitig, vorzugsweise im unteren Gehäusedrittel, den Einlass (38) für die Emulsion und den einen Auslass (46) für den einen abgetrennten Bestandteil aufweist und das kopfseitig, vorzugsweise im oberen Gehäusedrittel, besonders bevorzugt an zuoberst angeordneter Stelle des ersten Vorrichtungsgehäuses (2), den weiteren Auslass (22, 64) für den weiteren abgetrennten Bestandteil aufweist.

4. Phasentrennvorrichtung nach einem der vorstehenden Ansprüche, **dadurch gekennzeichnet, dass** der Auslass (46) für den einen abgetrennten Bestandteil unterhalb eines Eingangs (40) in das dem Einlass (38) unmittelbar nachfolgende Koaleszenzelement (42) in das erste Vorrichtungsgehäuse (2) eingebracht ist.

5. Phasentrennvorrichtung nach einem der vorstehenden Ansprüche, **dadurch gekennzeichnet, dass** vom Aufnahmevolumen des ersten Vorrichtungsgehäuses (2) her mehr Volumen, vorzugsweise mehr als das 1,5-fache Volumen, für den weiteren als für den einen Bestandteil zur Verfügung steht.

6. Phasentrennvorrichtung nach einem der vorstehenden Ansprüche, **dadurch gekennzeichnet, dass** der Auslass (22, 64) für den weiteren abgetrennten Bestandteil einer Ventileinrichtung (64) ist und/oder mit einer Entlüftungseinrichtung (66) versehen ist.

7. Phasentrennvorrichtung nach einem der vorstehenden Ansprüche, **dadurch gekennzeichnet, dass** zumindest ein Teil der eingesetzten Koaleszenzelemente (42) mit einer Filtrationsstufe (52) als Bestandteil des Elementes (42) versehen ist.

8. Phasentrennvorrichtung nach einem der vorstehenden Ansprüche, **dadurch gekennzeichnet, dass** zumindest ein Teil der eingesetzten Koaleszenzelemente (42) in Abströmrichtung außenumfangsseitig mit mindestens einem zusätzlichen fluiddurchlässigen Stützmantel (72) versehen ist, der
vorzugsweise durch Adsorption das Tropfenwachstum des einen abgetrennten Bestandteils begünstigt.

9. Phasentrennvorrichtung nach Anspruch 8, **dadurch gekennzeichnet, dass** die jeweilige Filtrationsstufe (52) und/oder das jeweilige Koaleszenzelement (42) in dem zusätzlichen fluiddurchlässigen Stützmantel (72) aufgenommen ist, der über zumindest zwei mittels eines zugehörigen Scharniers (80) klappbare Mantelteile (76, 78) verfügt, die in einer aufgeklappten Stellung einen Tausch des jeweils verbrauchten Elementes (42) gegen ein Neuelement (42) ermöglichen.

10. Phasentrennvorrichtung nach einem der vorstehenden Ansprüche, **dadurch gekennzeichnet, dass** für die Partikelfiltration das jeweilige Filterelement (24, 68) von außen nach innen durchströmt ist und der Filtratauslass (34) des zweiten Vorrichtungsgehäuses (4) über eine Verbindungsstelle (36) an den Einlass (38) des benachbart aufgestellten ersten Vorrichtungsgehäuses (2) angeschlossen ist.

11. Phasentrennvorrichtung nach einem der vorstehenden Ansprüche, **dadurch gekennzeichnet, dass** die Emulsion ein Wasser-Öl-Gemisch ist und dass der eine abzutrennende Bestandteil Wasser und der weitere abzutrennende Bestandteil ein Hydraulikmedium, wie Öl, ist.

12. Verwendung einer Phasentrennvorrichtung nach einem der vorstehenden Ansprüche, **dadurch gekennzeichnet, dass** an einen Tankauslass eines Vorratstankes betreffend eine hydraulische Anlage eine Förderpumpe angeschlossen ist, die im Rahmen einer Partikelfiltration aus dem zweiten Vorrichtungsgehäuse (4) mit dem jeweiligen Filterelement (24, 68) partikelabgereinigte Emulsion an das erste Vorrichtungsgehäuse (2) mit dem jeweiligen Koaleszenzelement (42) weiterleitet, das in Parallel- oder Reihenschaltung zu der Partikelfiltration das aufgetrennte Öl in Richtung Vorratstank weiterleitet.

## Claims

1. Phase separation device having a first device housing (2) accommodating at least one coalescing element (42), comprising
- an inlet (38) for supplying an emulsion that flows through the respective coalescing element (42) for separation into at least two of its constituents;
- an outlet (46) for a separated constituent; and
- a further outlet (22, 64) for another separated constituent, which has a lower density than the first constituent and floats on top of said first constituent,
wherein a combination of a coalescing separator and a gravity separator is located in the first device housing (2) and a particulate filter is arranged in a second device housing (4), said particulate filter being connected upstream of the coalescing and gravity separator in the first device housing (2) as a pre-filter, and
wherein at least one filter element (24, 68) is used for particle filtration, said filter element being accommodated in the second device housing (4),
**characterised in that**
the structure of the second device housing (4) corresponds to the greatest possible extent to the structure of the first device housing (2) and in each case has a modular housing structure in the form of a closed pressure vessel.

2. Phase separation device according to claim 1, **characterised in that** the inlet (38) for the emulsion opens out into the interior of the respective coalescing element (42), through which the flow passes from the inside to the outside.

3. Phase separation device according to either claim 1 or 2, **characterised in that** the first device housing (2) is formed by an elongated, as viewed in the vertical installation direction, in particular multi-part housing jacket, which comprises the inlet (38) for the emulsion and one outlet (46) for one separated constituent at the bottom, preferably in the lower third of the housing, and comprises the other outlet (22, 64) for the other separated constituent at the top, preferably in the upper third of the housing, more preferably at a position arranged at the very top of the first device housing (2).

4. Phase separation device according to any of the preceding claims, **characterised in that** the outlet (46) for one separated constituent is placed in the first device housing (2) below an entrance (40) into the coalescing element (42) immediately after the inlet (38).

5. Phase separation device according to any of the preceding claims, **characterised in that**, with respect to the receiving volume of the first device housing (2), more volume, preferably more than 1.5 times the volume, is available for the other constituent in comparison to the first constituent.

6. Phase separation device according to any of the preceding claims, **characterised in that** the outlet (22, 64) for the other separated constituent is provided with a valve apparatus (64) and/or with a venting apparatus (66).

7. Phase separation device according to any of the preceding claims, **characterised in that** at least part of the coalescing elements (42) used is provided with a filtration stage (52) as a component of the element (42).

8. Phase separation device according to any of the preceding claims, **characterised in that** at least part of the coalescing elements (42) used is provided in the outflow direction on the outer circumference with at least one additional fluid-permeable supporting jacket (72), which preferably favours droplet growth of the one separated constituent by adsorption.

9. Phase separation device according to claim 8, **characterised in that** the respective filtration stage (52) and/or the respective coalescing element (42) is accommodated in the additional fluid-permeable supporting jacket (72), which has at least two jacket parts (76, 78), which can be folded by means of an assigned hinge (80) and, in an unfolded position, permit the respective used element (42) to be replaced with a new element (42).

10. Phase separation device according to any of the preceding claims, **characterised in that** the flow passes through the respective filter element (24, 68) from the outside to the inside for particle filtration and the filter outlet (34) of the second device housing (4) is connected via a connection point (36) to the inlet (38) of the adjacently installed first device housing (2).

11. Phase separation device according to any of the preceding claims, **characterised in that** the emulsion is a water-oil mixture and **in that** one constituent to be separated is water and the other constituent to be separated is a hydraulic medium, such as oil.

12. Use of a phase separation device according to any of the preceding claims, **characterised in that** a feed pump is connected to a tank outlet of a storage tank in relation to a hydraulic system, said feed pump conveying emulsion cleaned of particles from the second device housing (4) having the respective filter element (24, 68) to the first device housing (2) having the respective coalescing element (42) during the particle filtration process, said coalescing element conveying the separated oil in the direction of the storage tank in a parallel or series connection to the particle filtration process.

## Revendications

1. Installation de séparation de phases comprenant une première enveloppe (2) d'installation, qui reçoit un élément (42) de coalescence, et qui
- a une entrée (38) pour l'entrée d'une émulsion, qui traverse l'élément (42) de coalescence respectif pour la séparation en au moins deux de ses constituants ;
- a une sortie (46) pour un constituant séparé ; et
- a une autre sortie (22, 64) pour un autre constituant séparé, qui par une masse volumique plus petite que le un constituant, surnage sur celui-ci,
dans laquelle dans la première enveloppe (2) de l'installation se trouve une combinaison d'un séparateur par coalescence et d'un séparateur par la force de gravité et dans une deuxième enveloppe (4) de l'installation est disposé un filtre de particules, qui est monté comme préfiltre en amont du séparateur par coalescence et du séparateur par la force de gravité dans la première enveloppe (2) de l'installation, et
dans laquelle, pour la filtration de particules, on utilise au moins un élément (24, 68) de filtre, qui est reçu dans la deuxième enveloppe (4) de l'installation, **caractérisée en ce que**
la construction de la deuxième enveloppe (4) de l'installation correspond dans une grande mesure à celle de la première enveloppe (2) de l'installation et a respectivement une construction d'enveloppe modulaire sous la forme d'un récipient fermé tenant la pression.

2. Installation de séparation de phases suivant la revendication 1, **caractérisée en ce que** l'entrée (38) pour l'émulsion débouche à l'intérieur de l'élément (42) de coalescence respectif, qui est traversé de l'intérieur vers l'extérieur.

3. Installation de séparation de phases suivant la revendication 1 ou 2, **caractérisée en ce que** la première enveloppe (2) de l'installation est formée d'une chemise d'enveloppe, en particulier en plusieurs parties, s'étendant en longueur, considérée dans la direction verticale d'érection, qui a du côté du pied, de préférence dans le tiers inférieur de l'enveloppe, l'entrée (38) pour l'émulsion et la une sortie (46) pour le un constituant séparé et qui a du côté de la tête, de préférence dans le tiers supérieur de l'enveloppe, d'une manière particulièrement préférée en un point disposé le plus haut de la première enveloppe (2) de l'installation, l'autre sortie (22, 64) pour l'autre constituant séparé.

4. Installation de séparation de phases suivant l'une des revendications précédentes, **caractérisée en ce que** la sortie (46) pour le un constituant séparé est ménagée dans la première enveloppe (2) de l'installation en-dessous d'une entrée (40) dans l'élément (42) de coalescence suivant directement l'entrée (38).

5. Installation de séparation de phases suivant l'une des revendications précédentes, **caractérisée en ce que**, du volume de réception de la première enveloppe (2) de l'installation, l'autre constituant dispose de plus du volume, de préférence volume de plus de 1,5 fois, que le un constituant.

6. Installation de séparation de phases suivant l'une des revendications précédentes, **caractérisée en ce que** la sortie (22, 64) pour l'autre constituant séparé est un dispositif (64) de soupape et/ou est pourvue d'un dispositif (66) de désaération.

7. Installation de séparation de phases suivant l'une des revendications précédentes, **caractérisée en ce qu'**au moins une partie des éléments (42) de coalescence utilisée est pourvue d'un étage (52) de filtration comme partie constitutive de l'élément (42).

8. Installation de séparation de phases suivant l'une des revendications précédentes, **caractérisée en ce qu'**au moins une partie des éléments (42) de coalescence utilisés est pourvue dans le sens de l'évacuation du côté du pourtour extérieur d'au moins une chemise (72) d'appui supplémentaire perméable aux fluides, qui favorise, de préférence par adsorption, la croissance de gouttes du un constituant séparé.

9. Installation de séparation de phases suivant la revendication 8, **caractérisée en ce que** l'étage (52) respectif de filtration et/ou l'élément (42) de coalescence respectif est reçu dans la chemise (72) d'appui supplémentaire perméable aux fluides, qui dispose d'au moins deux parties (76, 78) de chemise pouvant être rabattues au moyen d'une charnière (80) lui appartenant, qui permettent dans une position rabattue de remplacer l'élément (42) respectivement usé par un élément (42) neuf.

10. Installation de séparation de phases suivant l'une des revendications précédentes, **caractérisée en ce que**, pour la filtration de particules, l'élément (24, 68) respectif de filtre est traversé de l'extérieur vers l'intérieur et la sortie (34) pour le filtrat de la deuxième enveloppe (4) de l'installation est raccordée par un point (36) de liaison à l'entrée (38) de la première enveloppe (2) de l'installation érigée au voisinage.

11. Installation de séparation de phases suivant l'une des revendications précédentes, **caractérisée en ce que** l'émulsion est un mélange eau-huile et **en ce que** un constituant à séparer est de l'eau et l'autre constituant à séparer est un milieu hydraulique, comme de l'huile.

12. Utilisation d'une installation de séparation de phases suivant l'une des revendications précédentes, **caractérisée en ce que**, à une sortie d'un réservoir concernant une installation hydraulique est raccordée une pompe refoulante, qui, dans le cadre d'une filtration de particules, achemine, de la deuxième enveloppe (4) de l'installation ayant l'élément (24, 68) respectif de filtre, de l'émulsion épurée de particules à la première enveloppe (2) de l'installation ayant l'élément (42) respectif de coalescence, qui, suivant un circuit en parallèle ou en série par rapport à la filtration de particules, achemine l'huile séparée en direction du réservoir.
